# EUROPEAN PATENT APPLICATION

(11) **EP 4 730 253 A1**
(43) Date of publication of application: **22.04.2026**
(21) Application number: 24843459.9
(22) Date of filing: 15.07.2024
(51) Int. Cl.: G06T 5/00, G06T 11/60, G06F 3/14, G06F 3/0484, G06T 5/90, G06T 5/80

(54) **ELECTRONIC DEVICE AND IMAGE CORRECTING METHOD FOR ELECTRONIC DEVICE**

(30) Priority: 20.07.2023 KR 20230094628; 08.09.2023 KR 20230119567
(71) Applicant: Samsung Electronics Co., Ltd., Suwon-si, Gyeonggi-do 16677 (KR)
(72) Inventor: NAM, Sungguk, Suwon-si, Gyeonggi-do 16677 (KR); KIM, Yejin, Suwon-si, Gyeonggi-do 16677 (KR); KIM, Yuran, Suwon-si, Gyeonggi-do 16677 (KR)
(74) Representative: HGF
(86) International application number: PCT/KR2024/010096
(87) International publication number: WO 2025/018743

(57) **Abstract**

An electronic device (200) according to various embodiments of the present document may comprise: a display (230); a memory (220); and a processor (210) operatively connected to the display and the memory. The memory (220) may store instructions which can be executed by at least one processor and, when executed, instruct the electronic device (200) to: select any one original image among images stored in the memory; generate a corrected image by executing a correction function for the original image; identify, from among a plurality of objects included in the original image and the corrected image, at least one object having a large correction effect from the original image according to the execution of the correction function; generate at least one thumbnail including the identified at least one object; display at least a part of the original image and at least a part of the corrected image in a first area (410) of the display; and display the at least one thumbnail in a second area (430) of the display.

## Description

### [Technical Field]

The disclosure relates to an electronic device, and more particularly, to an electronic device that provides an auto-correction function for stored images.

### [Background Art]

A portable electronic device (hereinafter, electronic device) represented by a smartphone can provide a variety of user experiences through various applications. The electronic device can capture images of its surroundings using a camera and download and store image files over a network. The electronic device may include a gallery application that displays stored images and provides various functions, such as copying/deleting/moving images, sharing images with other devices, and image editing.

The gallery application provides an edit function that allows the user to directly edit images, and may also provide an auto-correction function that automatically analyzes and corrects images without a user's input.

### [Disclosure of Invention]

### [Technical Problem]

When the gallery application of the electronic device automatically corrects an image, the effect of image correction may not be significant, depending on the characteristics of an original image. In this case, the user may not perceive significant improvements in the corrected image compared to the original, and it may be difficult to identify which parts of the image have been improved.

### [Solution to Problem]

An electronic device according to the disclosure (or specification, invention) may include a display 230, a memory 220, and a processor 210 operatively connected to the display and the memory.

According to an embodiment, the memory 220 may store instructions that are executable by the at least one processor and, when executed, cause the electronic device to select one original image from among images stored in the memory, to generate a corrected image by executing a correction function for the original image, to identify at least one object having a large correction effect compared to the original image according to execution of the correction function among a plurality of objects contained in the original image and the corrected image, to generate at least one thumbnail containing the identified at least one object, and to display at least a portion of the original image and at least a portion of the corrected image in a first area 410 of the display, and display the at least one thumbnail in a second area 430 of the display.

According to an embodiment, the memory 220 may store instructions that cause the electronic device 200 to, when a user input is received for a first thumbnail 432 among the thumbnails displayed in the second area, display in the first area a first enlarged image 462, which magnifies an area including at least a portion of an object contained in the first thumbnail in the original image, and a second enlarged image 464, which magnifies an area including at least a portion of the object contained in the first thumbnail in the corrected image.

An image correcting method of an electronic device according to various embodiments of the disclosure may include selecting one original image from among images stored in a memory of the electronic device; generating a corrected image by executing a correction function for the original image; identifying at least one object having a large correction effect compared to the original image according to execution of the correction function among a plurality of objects contained in the original image and the corrected image; generating at least one thumbnail containing the identified at least one object; displaying at least a portion of the original image and at least a portion of the corrected image in a first area of a display of the electronic device, and displaying the at least one thumbnail in a second area of the display; and when a user input is received for a first thumbnail among the thumbnails displayed in the second area, displaying in the first area a first enlarged image, which magnifies an area including at least a portion of an object contained in the first thumbnail in the original image, and a second enlarged image, which magnifies an area including at least a portion of the object contained in the first thumbnail in the corrected image.

### [Advantageous Effects of invention]

According to various embodiments of the disclosure, an image correcting method for an electronic device can be provided that enables a user to easily recognize the effect of auto-correction when a gallery application of the electronic device automatically corrects an image, by extracting an object area with a large correction effect from a corrected image and providing it to the user.

### [Brief Description of Drawings]

FIG. 1 is a block diagram of an electronic device in a network environment, according to various embodiments.
FIG. 2 is a block diagram of an electronic device according to an embodiment.
FIG. 3 illustrates the architecture of an image auto-correction function according to an embodiment.
FIG. 4 illustrates screens sequentially displayed during image auto-correction in a gallery application according to an embodiment.
FIG. 5 illustrates an example of screens showing an original image and a corrected image according to an embodiment.
FIG. 6 illustrates an example of screens showing an original image and a corrected image according to an embodiment.
FIG. 7 illustrates an example of screens showing a specific object area in an original image and a corrected image according to an embodiment.
FIG. 8 illustrates screens sequentially displayed during image auto-correction in a gallery application according to an embodiment.
FIG. 9 illustrates screens sequentially displayed during image auto-correction in a gallery application according to an embodiment.
FIG. 10 illustrates an example of designating a certain area and changing the effect of a correction engine in a state where a specific object is displayed according to an embodiment.
FIG. 11 illustrates a method for determining the order of thumbnails corresponding to objects in an image according to an embodiment.
FIG. 12 illustrates a method for determining the order of thumbnails corresponding to objects in an image according to an embodiment.
FIG. 13 illustrates a method for determining the order of thumbnails corresponding to objects in an image according to an embodiment.
FIG. 14 is a flowchart of an image correcting method for an electronic device according to an embodiment.

### [Mode for the Invention]

Hereinafter, various embodiments of the disclosure will be described in detail with reference to the drawings so that a person skilled in the art can easily implement them. The disclosure may be, however, implemented in various different forms and is not limited to the embodiments described herein. In connection with the description of the drawings, the same or similar reference numerals may be used for identical or similar components. Additionally, in the drawings and related descriptions, well-known functions and configurations may be omitted for clarity and conciseness.

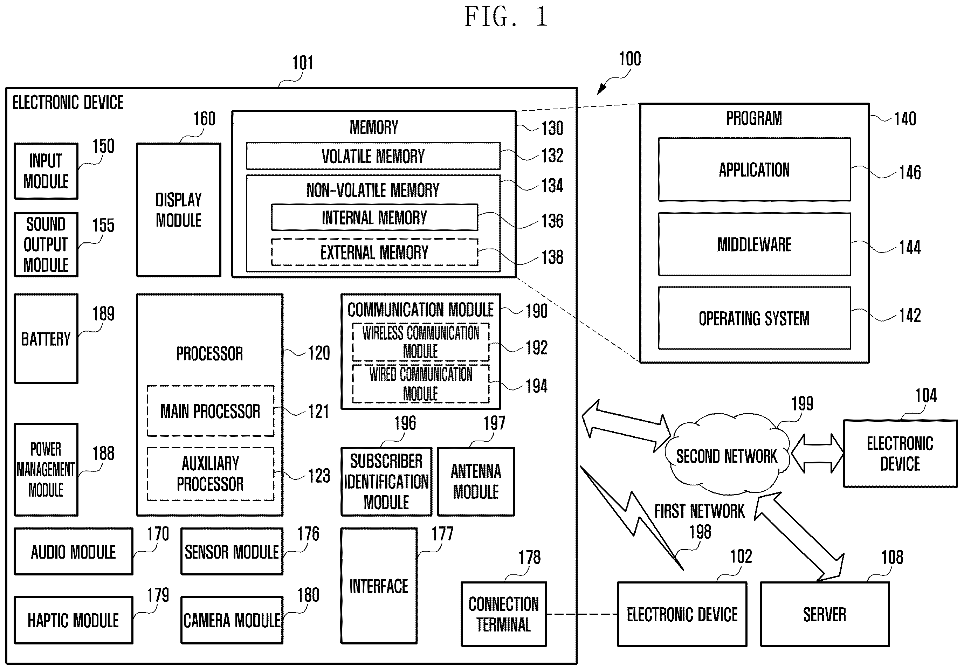

FIG. 1 is a block diagram of an electronic device 101 in a network environment 100, according to various embodiments. With reference to FIG. 1, the electronic device 101 in the network environment 100 may communicate with an external electronic device 102 via a first network 198 (e.g., a short-range wireless communication network), or at least one of an external electronic device 104 or a server 108 via a second network 199 (e.g., a long-range wireless communication network). According to an embodiment, the electronic device 101 may communicate with the external electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, and/or an antenna module 197. In some embodiments, at least one (e.g., the connecting terminal 178) of the above components may be omitted from the electronic device 101, or one or more other components may be added in the electronic device 101. In some embodiments, some (e.g., the sensor module 176, the camera module 180, or the antenna module 197) of the above components may be integrated into single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may load a command or data received from another component (e.g., the sensor module 176 or the communication module 190) in a volatile memory 132, process the command or the data stored in the volatile memory 132, and store resulting data in a non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, if the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control, for example, at least some of functions or states related to at least one component (e.g., the display module 160, the sensor module 176, or the communication module 190) among the components of the electronic device 101, instead of the main processor 121 while the main processor 121 is in an inactive (e.g., a sleep) state, or together with the main processor 121 while the main processor 121 is in an active state (e.g., executing an application). According to an embodiment, the auxiliary processor 123 (e.g., an ISP or a CP) may be implemented as part of another component (e.g., the camera module 180 or the communication module 190) functionally related to the auxiliary processor 123. According to an embodiment, the auxiliary processor 123 (e.g., a neural network processing device) may include a hardware structure specified for processing an artificial intelligence model. The artificial intelligence model may be created through machine learning. Such learning may be performed, for example, in the electronic device 101 itself on which the artificial intelligence model is performed, or may be performed through a separate server (e.g., the server 108). The learning algorithms may include, for example, supervised learning, unsupervised learning, semi-supervised learning, or reinforcement learning, but is not limited thereto. The artificial intelligence model may include a plurality of artificial neural network layers. The artificial neural network may be any of a deep neural network (DNN), a convolutional neural network (CNN), a recurrent neural network (RNN), a restricted Boltzmann machine (RBM), a deep belief network (DBN), a bidirectional recurrent DNN (BRDNN), a deep Q-network, or a combination of two or more of the above-mentioned networks, but is not limited the above-mentioned examples. In addition to the hardware structure, the artificial intelligence model may additionally or alternatively include a software structure.

The memory 130 may store various data used by at least one component (e.g., the processor 120 or the sensor module 176) of the electronic device 101. The data may include, for example, software (e.g., the program 140) and input data or output data for a command related thereto. The memory 130 may include the volatile memory 132 and/or the non-volatile memory 134.

The program 140 may be stored in the memory 130 as software, and may include, for example, an operating system (OS) 142, middleware 144, and/or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record, and the receiver may be used for incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or an external electronic device (e.g., the electronic device 102) (e.g., a speaker or a headphone) directly or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly or wirelessly. According to an embodiment, the interface 177 may include, for example, a high-definition multimedia interface (HDMI), a universal serial bus (USB) interface, a secure digital (SD) card interface, and/or an audio interface.

The connecting terminal 178 may include a connector via which the electronic device 101 may be physically connected with the external electronic device (e.g., the external electronic device 102). According to an embodiment, the connecting terminal 178 may include, for example, an HDMI connector, a USB connector, an SD card connector, and/or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors (ISPs), or flashes.

The power management module 188 may manage power supplied to or consumed by the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, and/or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more CPs that are operable independently from the processor 120 (e.g., the AP) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BLUETOOTH, wireless-fidelity (Wi-Fi) direct, or IR data association (IrDA)) or the second network 199 (e.g., a long-range communication network, such as a legacy cellular network, a 5^{th} generation (5G) network, a next generation communication network, the Internet, or a computer network (e.g., LAN or wide area network (WAN)). These various types of communication modules may be integrated into a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network, after a 4^{th} generation (4G) network, and next-generation communication technology, e.g., new radio (NR) access technology. The NR access technology may support high-speed transmission of high-capacity data (i.e., enhanced mobile broadband (eMBB)), minimization of terminal power and connection of multiple terminals (massive machine type communications (mMTC)), or high reliability and low latency (ultra-reliable and low-latency communications (URLLC)). The wireless communication module 192 may support a high-frequency band (e.g., mmWave band) to achieve, for example, a high data transmission rate. The wireless communication module 192 may support various technologies for securing performance in a high-frequency band, such as beamforming, massive multiple-input and multiple-output (MIMO), full-dimensional MIMO (FD-MIMO), array antenna, analog beam-forming, or large-scale antenna. The wireless communication module 192 may support various requirements specified in the electronic device 101, an external electronic device (e.g., external the electronic device 104), or a network system (e.g., the second network 199). According to an embodiment, the wireless communication module 192 may support a peak data rate for implementing eMBB (e.g., 20 Gbps or more), loss coverage for implementing mMTC (e.g., 164 dB or less), or U-plane latency for realizing URLLC (e.g., 0.5 ms or less for each of downlink (DL) and uplink (UL) or 1 ms or less for round trip).

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., an antenna array). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to a certain embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a PCB, an RFIC that is disposed on or adjacent to a first surface (e.g., the bottom surface) of the PCB and is capable of supporting a predetermined high-frequency band (e.g., a mmWave band), and a plurality of antennas (e.g., array antennas) that is disposed on or adjacent to a second surface (e.g., the top surface or the side surface) of the PCB and is capable of transmitting or receiving a signal of the predetermined high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the external electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide an ultra-low delay service using, for example, distributed computing or MEC. In another embodiment, the external electronic device 104 may include an internet of things (IoT) device. The server 108 may be an intelligent server using machine learning and/or neural networks. According to an embodiment of the disclosure, the external electronic device 104 or the server 108 may be included in the second network 199. The electronic device 101 may be applied to an intelligent service (e.g., smart home, smart city, smart car, or healthcare) based on 5G communication technology or IoT-related technology.

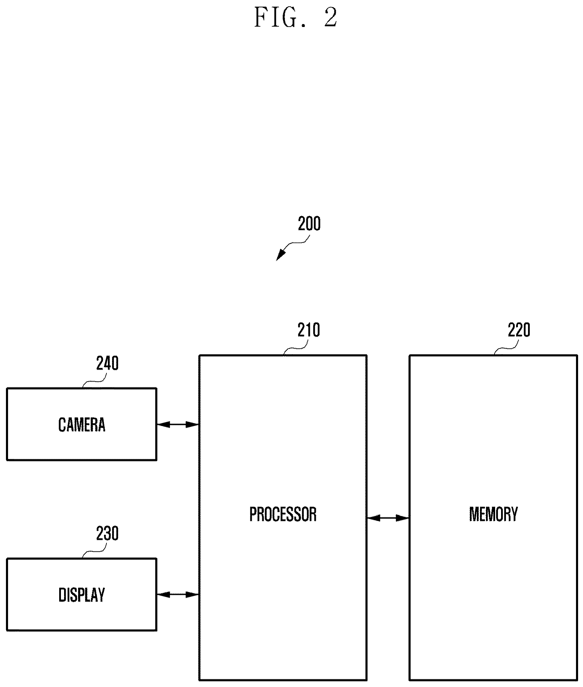

FIG. 2 is a block diagram of an electronic device according to an embodiment.

With reference to FIG. 2, the electronic device 200 according to an embodiment may include a display 230, a camera 240, a processor 210, and a memory 220. Even if some of the illustrated components are omitted or replaced with other components, various embodiments of the disclosure may be implemented. In addition to the illustrated components, the electronic device 200 may further include at least some of the components and/or functions of the electronic device 101 in FIG. 1. At least some of the illustrated (or not illustrated) components of the electronic device 200 may be operatively, functionally, and/or electrically connected to each other.

According to an embodiment, some components (e.g., the processor 210, the memory 220) of the electronic device 200 may be disposed in a housing of the electronic device 200, and at least some other components (e.g., the display 230, the camera 240) may be visually exposed to the outside of the housing at least in part. The electronic device 200 may be implemented as a device of various form factors, such as a foldable type, a rollable type (or a slidable type), etc., in which a display area can be expanded.

According to an embodiment, the display 230 can display various images provided from the processor 210. For example, the display 230 may be implemented as any one of a liquid crystal display (LCD), a light-emitting diode (LED) display, an organic light-emitting diode (OLED) display, a micro electro mechanical systems (MEMS) display, or an electronic paper display, but it is not limited thereto. The display 230 may be composed of a touch screen that detects a touch and/or proximity touch (or hovering) input using a part (e.g., a finger) of a user's body or an input device (e.g., a stylus pen). The display 230 may include at least some of the constitutions and/or functions of the display module 160 in FIG. 1.

According to an embodiment, the camera 240 can capture a surrounding subject, convert image information into digital data, and provide it to the processor 210. The electronic device 200 may include at least one camera on a front surface of the housing where the display 230 is disposed and/or on a rear surface opposite thereto. According to an embodiment, the camera 240 may include a lens assembly including at least one lens that collects light from an external environment (or a subject), an image sensor (e.g., a charged coupled device (CCD) sensor, a complementary metal oxide semiconductor (CMOS) sensor) that converts the light collected through the lens assembly into an electrical signal to generate image data, and an image signal processor that performs various processing operations on the image data acquired from the image sensor. The camera 240 may provide the acquired image data to the processor 210 in real time through an interface (e.g., a mobile industry processor interface). The camera 240 may include at least some of the configurations and/or functions of the camera module 180 in FIG. 1.

According to an embodiment, the memory 220 may include a volatile memory and a non-volatile memory and can temporarily or permanently store various data. The memory 220 may include at least some of the configuration and/or functions of the memory 130 in FIG. 1 and can store the program 140 in FIG. 1.

According to an embodiment, the memory 220 can store various instructions that can be executed by the processor 210. Such instructions may include control commands, such as arithmetic and logical operations, data transfer, and/or input/output, that can be recognized by the processor 210.

According to an embodiment, the processor 210 is capable of performing computational or data processing related to control and/or communication of each component of the electronic device 200 and may be composed of one or more processors. The processor 210 may include at least some of the configurations and/or functions of the processor 120 in FIG. 1.

According to an embodiment, the computational and data processing functions that the processor 210 may implement in the electronic device 200 are not limited. However, the disclosure describes various embodiments for extracting an object with a significant correction effect and providing it to the user in the case of generating a corrected image from an original image by using the auto-correction function of the gallery application. The operations of the processor 210 to be described below can be performed by loading instructions stored in the memory 220.

In the disclosure, the description that the processor 210 (or the electronic device 200) can perform a certain operation (or function, work, task) may be interpreted as having substantially the same meaning as that an instruction (or command, computer program) causing the electronic device 200 (or the processor 210) to perform such an operation is stored in the memory 220 (e.g., non-volatile memory, storage). In addition, the description that the processor 210 can perform a certain operation may be interpreted as having substantially the same meaning as that at least one processor, not specified, can perform such an operation.

According to an embodiment, the processor 210 can store and execute a gallery application. For example, the gallery application can display images stored in the memory 220 and support various functions such as copying/deleting/moving images, sharing images with other devices, and editing images. The images provided in the gallery application may include images acquired by a camera application using the camera 240 and/or images downloaded via a network. The disclosure describes, for example, but is not limited to, the gallery application, and various embodiments of the disclosure can be applied to various applications that provide a function for editing and displaying image data.

According to an embodiment, the processor 210 may provide an auto-correction function for a specific image selected by a user. Here, the auto-correction function (or remaster function) may be a function that analyzes the pixel data of the image and automatically improves the image by using various image enhancement engines. For example, the auto-correction function (or remaster function) may be provided in the gallery application. When the auto-correction function is executed for a specific image in the gallery application, it may analyze resolution, brightness, color, sharpness, backlighting, shaking, etc. by utilizing artificial intelligence to correct unclear images due to shaking or blurring, low-resolution images, etc. Hereinafter, the image prior to correction, which is the subject of the auto-correction function, may be referred to as the original image, and the image improved by reflecting the auto-correction function may be referred to as the corrected image (or compensated image). Additionally, the auto-correction function may also be referred to as a remaster function, an image correction function, or an image editing function. The auto-correction function may be applied to both still and moving images.

According to an embodiment, in a state where the gallery application is executed, the processor 210 may select an original image from among images stored in the memory 220 in response to a first user input (e.g., selection of an image thumbnail) detected on the display 230 and execute the auto-correction function for the selected original image in response to a second user input (e.g., selection of an auto-correction function on a function menu). When the auto-correction function is executed, a blurry, shaky, and/or low-resolution photo may be improved and corrected to be clear, sharp, and/or high-resolution.

According to an embodiment, the auto-correction function may be executed by at least some of a plurality of correction engines (or compensation engines). For example, the correction functions performed by the plurality of correction engines may include, but are not limited to, at least one of improve color, improve clarity, remove shadow, upscaling, compensate low light image, high dynamic range (HDR), de-blurring, de-moire, auto-tone, or ultra-wide (UW) distortion correction for at least a portion of the original image. Each correction engine may perform at least one of the correction functions mentioned above (or not mentioned). For example, a first correction engine may perform only de-blurring, and a second correction engine may perform both de-blurring and upscaling. According to an embodiment, the correction engines may be software modules stored in the memory 220 and executed by the processor 210.

According to an embodiment, the processor 210 may analyze the original image, identify the necessary correction function for the original image, and select at least one correction engine.

According to another embodiment, the processor 210 may perform the auto-correction function by sequentially applying a set of filters in a single process, without using a separate correction engine.

According to an embodiment, the original image may contain a plurality of objects, and the auto-correction function may be applied to some of the objects or to the entire image. For example, if the original image photographed by the user contains objects such as a person, an animal, a thing, and a background, the improve face clarity function may be applied only to the face area of the person object. According to an embodiment, when the auto-correction function is executed, the processor 210 may extract objects contained in the image, analyze the characteristics of pixel data of each object, and determine at least one correction engine to be applied to each object or to the entire image.

According to an embodiment, when image auto-correction is completed and thereby a corrected image (or compensated image) is generated, the processor 210 may display the corrected image in at least a portion of a designated area (e.g., the first area) on a screen of the gallery application.

According to an embodiment, the processor 210 may display at least a portion of the original image and at least a portion of the corrected image together. For example, the processor 210 may display a first part of the original image in a first sub-area of a first area of a screen of the gallery application, and display a second part of the corrected image in a second sub-area of the first area. Here, the first part of the original image may be a left portion, the second part may be a right portion excluding the first part, and the first and second parts of the corrected image may be image parts corresponding to the first and second parts of the original image, respectively. As the first part of the original image and the second part of the corrected image are displayed together, the user may recognize the corrected portion of the image together with the uncorrected portion.

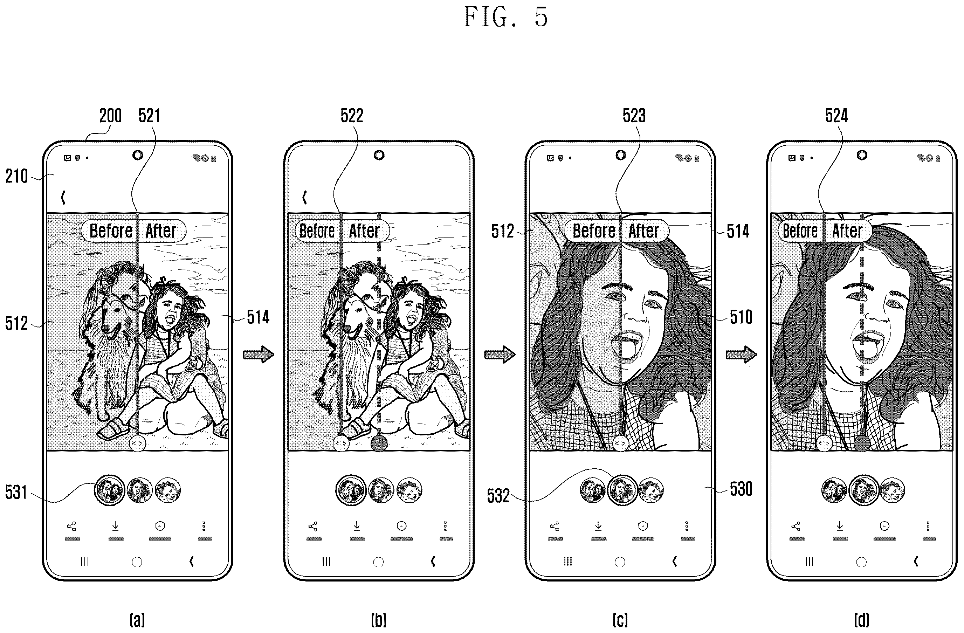

According to an embodiment, the processor 210 may display a boundary indicator separating the first sub-area, which displays at least a portion (e.g., the first part) of the original image, and the second sub-area, which displays at least a portion (e.g., the second part) of the corrected image. The position of the boundary indicator may be moved in response to a user input (e.g., touch and drag) on the boundary indicator, and thus, the sizes of the first and second sub-areas may be changed. For example, if the user touches the boundary indicator and then drags it to the left, the size of the first sub-area may decrease, i.e., the area where the original image is displayed may decrease, and the size of the second sub-area may increase, i.e., the area where the corrected image is displayed may increase. An example of displaying the original image and the corrected image in the first sub-area and the second sub-area, which are distinguished by the boundary indicator, will be described in more detail with reference to FIG. 5.

According to an embodiment, in the corrected image, the processor 210 may identify (or select) at least one object that has a significant correction effect compared to the original image. When the auto-correction function is executed, the correction effect may be applied to at least some objects contained in the original image, and the level of the correction effect applied to each object may vary. For example, when the improve face clarity function of a clarity improvement engine is applied to the original image, a significant correction effect may be applied to a person face object among the objects contained in the original image, whereas a small correction effect may be applied to non-face objects (e.g., any other body part of a person, an animal, or a thing).

According to an embodiment, the processor 210 may determine whether an object has a significant correction effect by the auto-correction function, based on changes in pixel data within the area containing the object in the original image and the corrected image. The processor 210 may extract a plurality of objects from the original image or the corrected image and segment the area corresponding to each of the plurality of objects. The processor 210 may analyze the pixel data of the pixels included in each segmented object area.

According to an embodiment, the processor 210 may determine whether an object has a significant auto-correction effect, based on the average of the amount of change in the pixel data of each pixel within the area containing the object in the original image and the corrected image. For example, the processor 210 may calculate the difference in pixel data between a specific pixel in the original image and the corresponding pixel in the corrected image within the area containing the extracted specific object, calculate the absolute value (or square) of the calculated difference, and obtain the average of the absolute values (or squares) of the pixel data differences calculated for each pixel. If the average of the absolute values (or squares) of the pixel data differences calculated in the specific object area is greater than or equal to a reference value, the processor 210 may determine that the object has a significant correction effect by the auto-correction function.

According to another embodiment, the processor 210 may determine whether an object has a significant correction effect, based on the ratio of pixels whose pixel data has changed among the pixels within the area containing the object. For example, the processor 210 may compare pixel data of the original image and pixel data of the corrected image in the area of the extracted specific object, and if the ratio of the number of pixels with changed pixel data to the total number of pixels in the area of the object is greater than or equal to a reference value, the processor may determine that the object has a significant correction effect by the auto-correction function.

According to an embodiment, the processor 210 may generate at least one thumbnail corresponding to at least one object with a significant correction effect. The thumbnail may be a reduced image of an area containing the object. According to an embodiment, the processor 210 may generate a thumbnail of an area containing a plurality of objects. For example, if identified objects are of the same type (e.g., a person's face) and a distance between the respective objects is within a specified distance, the area containing such objects may be generated as a single thumbnail.

According to an embodiment, the processor 210 may display the at least one generated thumbnail on the gallery application screen together with at least a portion of the original image and/or at least a portion of the corrected image. According to an embodiment, the processor 210 may display at least a portion of the original image and at least a portion of the corrected image in a first area of the display 230, and may display at least one thumbnail in a second area of the display 230. Here, the second area may be an area below the first area on the gallery application screen. According to an embodiment, the processor 210 may generate a thumbnail of the original image or the corrected image and display it in the second area together with a thumbnail of an area including the object. In the disclosure, the first area where the entire image or the image of the object is displayed may be referred to as a remaster area, and the second area where thumbnails are displayed may be referred to as a focus view area.

According to an embodiment, when a user input for any one of the thumbnails is received, the processor 210 may focus on the area containing the thumbnail and display it on the gallery application screen. For example, when a user input for a first thumbnail is received in a state where a first portion of the original image and a second portion of the corrected image based on the entire image area are displayed in the first area of the gallery application screen, the processor 210 may enlarge an area of an object included in the first thumbnail and display it in the first area. In this case, the processor 210 may display a first enlarged image, which is an enlargement of an area containing at least a portion of the object included in the first thumbnail from the original image, in a first sub-area within the first area of the gallery application screen, and may display a second enlarged image, which is an enlargement of an area containing at least another portion of the object included in the first thumbnail from the corrected image, in a second sub-area within the first area of the gallery application screen.

According to an embodiment, when a second thumbnail is selected from among the thumbnails displayed in the second area while the area corresponding to the first thumbnail is being displayed, the processor 210 may change the portions displayed in the first area to a portion of the original image and a portion of the corrected image which contain the object of the second thumbnail. In this case, the processor 210 may highlight, in the second area, the thumbnail selected by the user or the thumbnail corresponding to the object displayed in the first area.

Thus, by simultaneously displaying the areas of the selected object from the original image and the corrected image in response to the thumbnail selection, the user can readily perceive the extent of the correction effect applied to a specific portion of the image.

According to an embodiment, the processor 210 may display on the display 230 an item indicating at least one correction engine applied to the corrected image. For example, the processor 210 may display the item on a third area, which is an area above the first area where the original image and/or the corrected image are/is displayed on the gallery application screen. In the disclosure, the third area where the item indicating the correction engine is displayed may also be referred to as a remaster engine area.

According to an embodiment, when the entire original image and corrected image are displayed in the first area, the processor 210 may display an item indicating all correction engines applied to the corrected image in the third area. In addition, when the areas of a specific object in the original image and the corrected image are displayed in the first area, the processor 210 may display in the third area an item indicating the correction engine applied to the displayed object among the correction engines applied to the corrected image.

According to an embodiment, based on a user input for the item indicating the correction engine, the processor 210 may remove the correction effect of the correction engine for that item.

According to an embodiment, when a user input is received for a specific item while at least a portion of the entire original image and at least a portion of the corrected image are displayed in the first area, the processor 210 may remove the correction effect of the correction engine indicated by the item from the entire area of the corrected image.

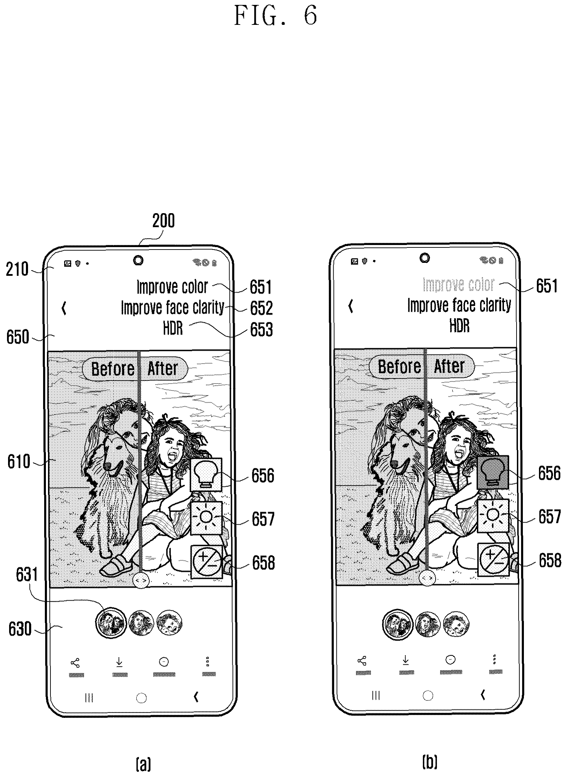

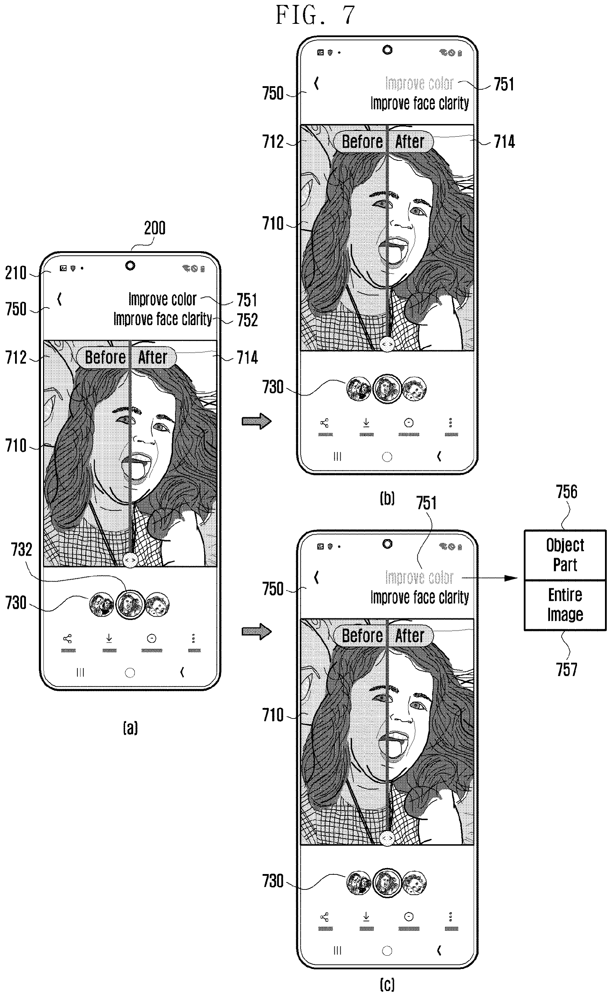

According to an embodiment, when a user input is received for a specific item while an object included in the first thumbnail is displayed in the first area, the processor 210 may remove the correction effect of the correction engine indicated by the item from the corrected image only for the object area of the first thumbnail. According to another embodiment, when a user input is received for an item indicating a correction engine, the processor 210 may provide an additional menu for selecting an area (e.g., the entire area, the object area of the thumbnail) from which the correction effect of the correction engine of the item is to be removed, and may remove the correction effect for the area selected by the user through the additional menu. This embodiment will be described in more detail with reference to FIGS. 6 and 7.

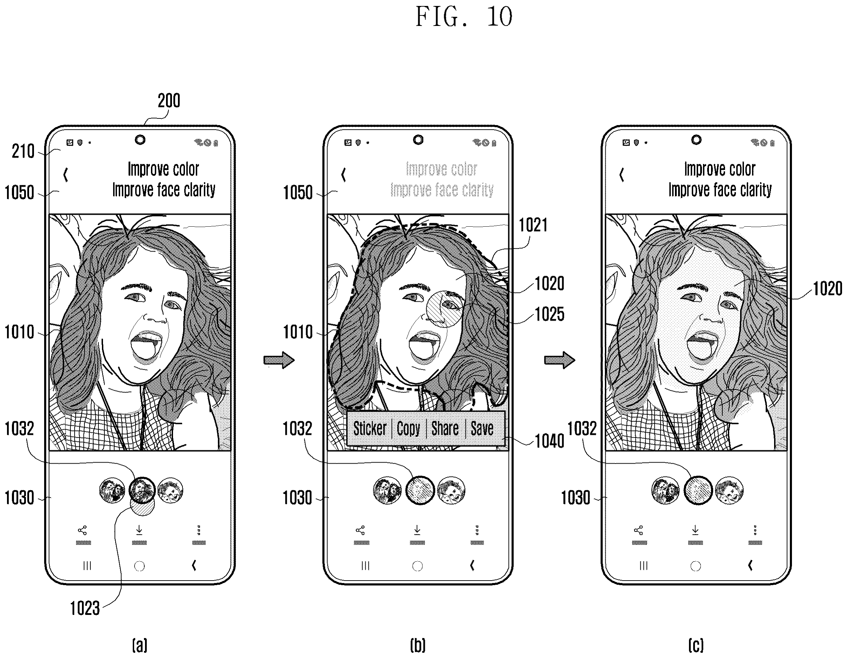

According to an embodiment, while at least a portion of the original image and at least a portion of the corrected image are displayed, the processor 210 may receive a user input designating a specific area of the image and remove the correction effect of the correction engine applied to the area designated by the user. This embodiment will be described in more detail with reference to FIG. 10.

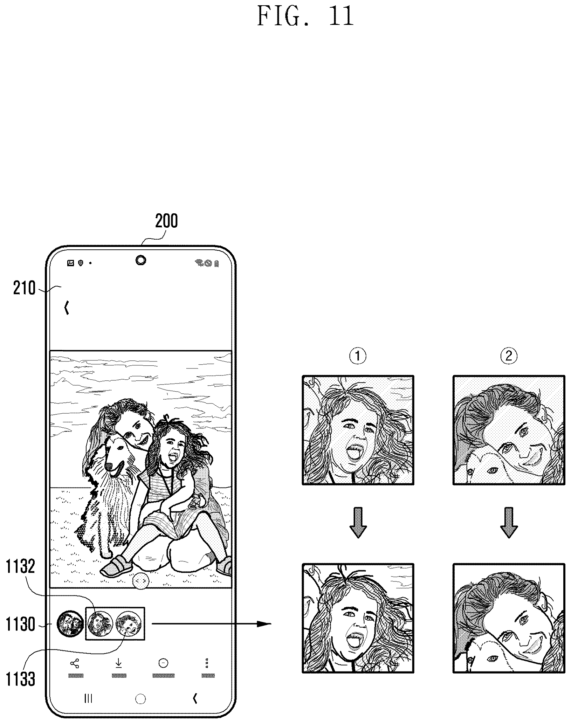

According to an embodiment, when a plurality of areas of objects with large correction effects are extracted from the corrected image, the processor 210 may determine the arrangement order of a plurality of thumbnails indicating the respective objects. According to an embodiment, the processor 210 may determine the arrangement order of thumbnails in the second area, based on the order of correction effects for the objects included in the thumbnails. According to an embodiment, the processor 210 may determine the arrangement order of thumbnails, based on the types (e.g., person, animal, thing, background) and/or sizes of the objects included in the thumbnails. An embodiment of determining the arrangement order of thumbnails in the second area will be described in more detail with reference to FIGS. 11 to 13.

Instructions for performing the above-described operations of the electronic device 200 (or the processor 210) may be stored in a computer-readable recording medium. The recording medium may be tangible and non-transitory. The recording medium may store one or more computer programs including the instructions.

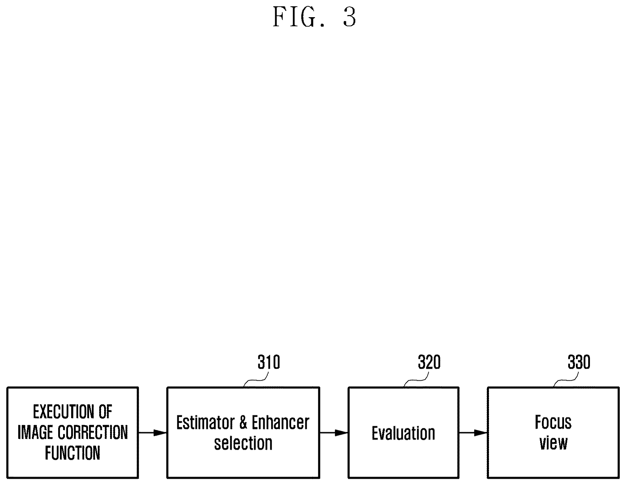

FIG. 3 illustrates the architecture of an image auto-correction function according to an embodiment.

Each of illustrated modules may be provided by a gallery application running on an electronic device (e.g., the electronic device 200 in FIG. 2) and may be a software module executed by a processor (e.g., the processor 210 in FIG. 2).

According to an embodiment, the electronic device may generate a corrected image by executing an auto-correction function on an original image. Here, the auto-correction function may be a function that analyzes the pixel data of an image and automatically improves the image by using various image enhancement engines, and may be referred to as a remaster function. The auto-correction function may be provided in the gallery application.

According to an embodiment, the electronic device may trigger the execution of the auto-correction function for a specific image. For example, the electronic device may select an original image from among images stored in the memory based on a first user input (e.g., selection of an image thumbnail) detected on the display while the gallery application is running, and may execute the auto-correction function on the selected original image based on a second user input (e.g., selection of the auto-correction function from a function menu).

According to an embodiment, an estimator and enhancer selection module 310 may analyze an original image to be automatically corrected and select at least one correction engine to be used for image correction. For example, the correction function performed by a plurality of correction engines may include, but is not limited to, at least one of improve color, improve clarity, remove shadow, upscaling, compensate for low light images, high dynamic range (HDR), de-blurring, de-moire, auto-tone, or ultra-wide (UW) distortion correction for at least a portion of the original image.

According to an embodiment, the correction function performed by each correction engine may include at least one filter effect. For example, in the case of an improve color engine, at least one filter effect of light balance, brightness, exposure, contrast, and highlight may be applied to at least a portion of the image.

According to an embodiment, an evaluation module 320 may compare pixel data of images before and after the correction engine is applied, and calculate the amount of change. For example, the evaluation module 320 may identify the pixel data of the original image and the pixel data of the corrected image for all pixels or some samples included in the area of a specific object, and calculate the difference and the absolute value (or square) of the difference. The evaluation module 320 may obtain the average of the absolute values (or squares) of the pixel data differences calculated for each pixel. Alternatively, the evaluation module 320 may determine the ratio of pixels whose pixel data has changed in each object area before and after the correction engine is applied.

According to an embodiment, a focus view module 330 may determine at least one object to be provided through a thumbnail in a focus view area of the gallery application screen. For example, the focus view module 330 may compare the average of the absolute values (or squares) of the pixel data differences calculated by the evaluation module 320 with a reference value, and if the average is greater than or equal to a reference value, it may determine that the corresponding object has a large effect of applying the correction engine. Alternatively, if the ratio of pixels whose pixel data has changed calculated by the evaluation module 320 is greater than or equal to a reference value, the focus view module 330 may determine that the corresponding object has a large effect of applying the correction engine. The focus view module 330 may generate at least one thumbnail corresponding to at least one object determined to have a large effect of applying the correction engine.

According to an embodiment, the focus view module 330 may display the at least one generated thumbnail in the focus view area of the gallery application screen. For example, on the gallery application screen, the at least one generated object thumbnail may be displayed in the focus view area (or second area) formed below the remaster area (or first area) where at least a portion of the original image and at least a portion of the corrected image are displayed.

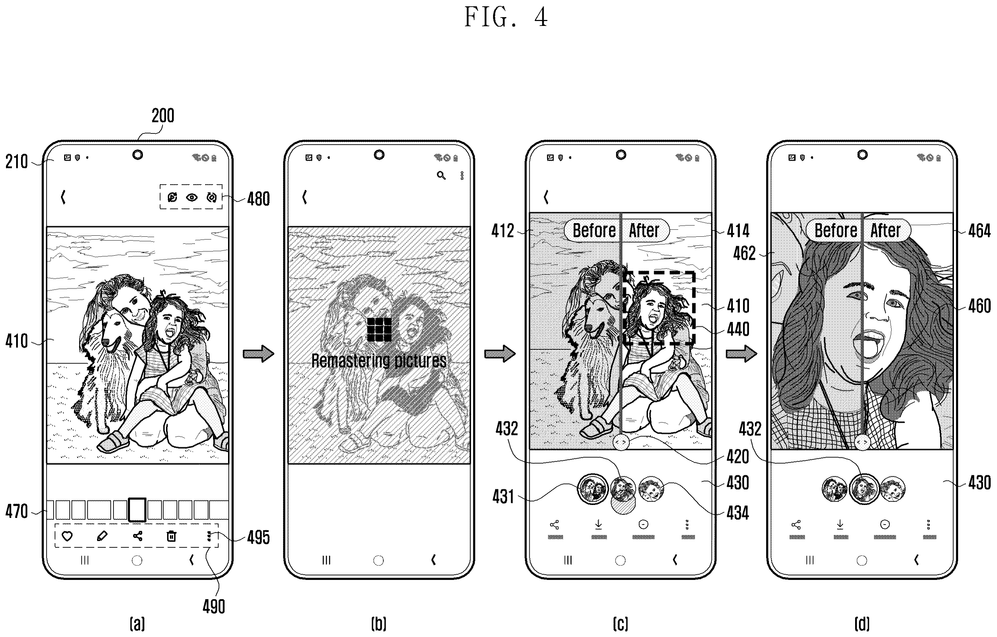

FIG. 4 illustrates screens sequentially displayed during image auto-correction in a gallery application according to an embodiment.

According to an embodiment, an electronic device 200 (e.g., the electronic device 200 in FIG. 2) may execute a gallery application and display a screen of the gallery application on a display 210. Hereinafter, the gallery application screen will be described as an example, but the disclosure is not limited thereto. Various embodiments of the disclosure may be applied to other applications capable of editing and displaying image data.

With reference to (a) of FIG. 4, an image selected from among images stored in a memory may be displayed. In addition, an application screen may include a list of scrollable thumbnails 470, an upper item list 480 including a screen sharing (e.g., Smart view) item, an AI service (e.g., Bixby vision) item, and an image rotation item, and a lower item list 490 including a favorite item, an image editing item, an image sharing item, a delete item, and a more options item 495.

According to an embodiment, while the gallery application is running, the electronic device 200 may select an original image from among images stored in the memory in response to a first user input detected on the display 210, and may execute an auto-correction function (or a remaster function) for the selected original image in response to a second user input. For example, when a thumbnail is selected from the scrollable thumbnail list 470 in (a) of FIG. 4, the electronic device 200 may display an image of the selected thumbnail. When the more options item 495 is selected in the lower item list 490 while a specific image is displayed, the electronic device 200 may provide an item for selection of the auto-correction function (or remaster function) as one of additional options, and may execute the auto-correction function when the item is selected. The arrangement of the image, the thumbnail list, and the respective items is not limited to that illustrated in (a) of FIG. 4, and may be implemented in various forms. In addition, a user interface for executing the auto-correction function is not limited to that described, and the auto-correction function item may be provided in the upper item list 480 or the lower item list 490, or the auto-correction function may be executed in response to a predetermined touch input or voice input.

According to an embodiment, when the execution of the auto-correction function is triggered, the electronic device 200 may analyze the original image, identify the necessary correction function for the original image, and select at least one correction engine. With reference to (b) of FIG. 4, the electronic device 200 may provide a user interface indicating that auto-correction is in progress while performing the analysis operation, i.e., before the generation of the corrected image is completed.

According to an embodiment, when the image auto-correction is completed and thereby the corrected image is generated, the electronic device 200 may display at least a portion of the corrected image in at least a portion of a first area 410 (or remaster area) designated on the gallery application screen. According to an embodiment, the electronic device 200 may display a first part of the original image in a first sub-area 412 of the first area 410 of the gallery application screen, and may display a second part of the corrected image in a second sub-area 414 of the first area 410. Here, the first part of the original image is a left portion, the second part is a right portion excluding the first part, and the first and second parts of the corrected image may be image parts corresponding to the first and second parts of the original image, respectively.

With reference to (c) of FIG. 4, the left portion (or first part) of the original image and the right portion (or second part) of the corrected image may be displayed in the first area 410 of the gallery application screen. In addition, the electronic device 200 may display a boundary indicator 420 separating the first sub-area 412, which displays at least a portion (e.g., the first part) of the original image, and the second sub-area 414, which displays at least a portion (e.g., the second part) of the corrected image. The sizes of the first sub-area 412 and the second sub-area 414 may be changed based on a user input to the boundary indicator 420.

According to an embodiment, an item indicating whether the image is before or after correction, such as "before" or "after", may be displayed in the first sub-area 412 and the second sub-area 414, and this item may include any other text (e.g., before correction, after correction), be displayed in the form of a visual icon, or not be displayed.

According to an embodiment, the electronic device 200 may identify at least one object in the corrected image that has a large correction effect compared to the original image. According to an embodiment, the electronic device 200 may determine whether an object has a large auto-correction effect, based on the average of the amount of change in pixel data of each pixel within an area containing the object in the original image and the corrected image. For example, the electronic device 200 may calculate the difference in pixel data between a specific pixel in the original image and the corresponding pixel in the corrected image within the area of a specific object extracted, calculate the absolute value (or square) of the calculated difference, and obtain the average of the absolute values (or squares) of the pixel data differences calculated for each pixel. If the average of the absolute values (or squares) of the pixel data differences calculated in the specific object area is greater than or equal to a reference value, the electronic device 200 may determine that the corresponding object has a large correction effect of the auto-correction function. According to another embodiment, the electronic device 200 may identify at least one object having a large correction effect, further based on at least one of the ratio of pixels whose pixel data has changed among the pixels in the area containing the object, the number of filters applied to each object, or the size of a filter parameter used in the filter.

According to an embodiment, the electronic device 200 may generate at least one thumbnail respectively corresponding to the at least one object selected as having a large correction effect. The electronic device 200 may display the at least one generated thumbnail 431 and 432 in the second area 430 (or focus view area) of the gallery application. According to an embodiment, the electronic device 200 may determine the arrangement order of the thumbnails in the second area 430, based on at least one of the order of the correction effects for objects included in respective thumbnails, the object types, or the object sizes.

With reference to (c) of FIG. 4, a thumbnail 431 of the entire image, a thumbnail 432 of a first object, and a thumbnail 434 of a second object may be displayed in the second area 430 below the first area 410 where the original image and the corrected image are displayed. The electronic device 200 may highlight the thumbnail 431 of the entire image corresponding to the image currently displayed in the first area 410 from the list of thumbnails in the second area 430.

According to an embodiment, each thumbnail displayed in the second area 430 may be selected by a user input, and be configured to be scrollable left and right when there are a large number of thumbnails.

According to an embodiment, based on the selection of any one of the thumbnails displayed in the second area 430, the electronic device 200 may display the object area of the selected thumbnail from the original image and the corrected image in the first area 410. That is, when the thumbnail 432 of the first object is selected while the entire image is displayed as in (c) of FIG. 4, the image provided in the first area 410 may be changed to an enlarged image 460 as in (d) of FIG. 4 that enlarges an area 440 including the first object as in (c) of FIG. 4.

According to an embodiment, the electronic device 200 may display a first enlarged image 462, which magnifies the left portion of the first object in the original image, in the first sub-area 412, and a second enlarged image 464, which magnifies the right portion of the first object in the corrected image, in the second sub-area 414. That is, the focused object's appearance may be magnified before and after correction and displayed together in the first area 410.

According to an embodiment, in the process of displaying the first enlarged image 462 and the second enlarged image 464 that magnify the area 440 including the first object in response to the selection of the thumbnail 432 of the first object, a correction effect different from the correction effect previously applied to the entire image displayed in the first area 410 may be applied. For example, only at least some of correction filters applied to the entire image may be applied to the area 440 including the first object.

According to an embodiment, when the thumbnail of the second object is selected based on a user input while the first and second enlarged images 462 and 464 are displayed in the first area 410 of the gallery application, the electronic device 200 may change the images displayed in the first area 410 to an image that enlarges a portion of the original image including the second object and an image that enlarges a portion of the corrected image.

As such, the electronic device 200 may display the original image and the corrected image together in each object area, and the user can perceive the extent of the correction effect applied to each portion of the image by selecting the corresponding thumbnail.

FIG. 5 illustrates an example of screens showing an original image and a corrected image according to an embodiment.

According to an embodiment, when the auto-correction function (or remaster function) is executed, the electronic device 200 (e.g., the electronic device 200 in FIG. 2) may display at least a portion of the original image and at least a portion of the corrected image in the first area 510 (or remaster area) of the application screen.

According to an embodiment, the electronic device 200 may display a first part of the original image in a first sub-area 512 and a second part of the corrected image in a second sub-area 514, and the first sub-area 512 and the second sub-area 514 may be distinguished through boundary indicators 521, 522, 523, and 524.

With reference to (a) of FIG. 5, when a thumbnail 531 of the entire image is selected from among the thumbnails in a second area 530, the electronic device 200 may display a left portion of the original image in the first sub-area 512 and a right portion of the corrected image in the second sub-area 514. The first sub-area 512 and the second sub-area 514 may be distinguished by the boundary indicator 521.

According to an embodiment, the sizes of the first sub-area 512 and the second sub-area 514 may be changed based on a user input. With reference to (b) of FIG. 5, when the user touches the boundary indicator 522 and moves it to the left, the size (or area) of the first sub-area 512 may be reduced and the size of the second sub-area 514 may be enlarged. Thus, the area where the original image is displayed may be reduced and the area where the corrected image is displayed may be enlarged. The user may identify which correction function is applied to the image by moving the boundary indicator 522 left and right.

According to an embodiment, when a user input is received for any one of the thumbnails displayed in the second area 530, the electronic device 200 may enlarge and display the area including the corresponding thumbnail in the first area 510 of the gallery application screen.

With reference to (c) of FIG. 5, when a thumbnail 532 of a first object is selected from the thumbnails in the second area 530, the electronic device 200 may display a left portion of the area of the first object in the original image and a right portion of the area of the first object in the corrected image in the first sub-area 512 and the second sub-area 514, respectively. Even when an enlarged object image is displayed, the first sub-area 512 and the second sub-area 514 may be distinguished by the boundary indicator 523.

With reference to (d) of FIG. 5, when the user touches the boundary indicator 524 and moves it to the left, the size (or area) of the first sub-area 512 may be reduced, and the size of the second sub-area 514 may be enlarged. Thus, in the area of the corresponding object, an image to which a correction effect is not applied may be reduced, and an image to which the correction effect is applied may be enlarged. The user may identify which correction function is applied to the object by moving the boundary indicator 524 left and right.

FIG. 6 illustrates an example of screens showing an original image and a corrected image according to an embodiment.

According to an embodiment, the electronic device 200 may select at least one of a plurality of predetermined correction engines through analysis of the original image. For example, correction functions performed by the plurality of correction engines may include, but are not limited to, at least one of improve color, improve clarity, remove shadow, upscaling, compensate low light image, high dynamic range (HDR), de-blurring, de-moire, auto-tone, or ultra-wide (UW) distortion correction for at least a portion of the original image.

According to an embodiment, when the auto-correction function of an image is executed, the electronic device 200 (e.g., the electronic device 200 in FIG. 2) may display at least a portion of the original image and at least a portion of the corrected image in a first area 610 of an application screen, display a thumbnail of at least one object with a large correction effect in a second area 630, and display at least one item indicating a correction engine applied to the corrected image in a third area 650.

With reference to (a) of FIG. 6, when the auto-correction function is executed for the selected original image, the improve color, the improve face clarity, and the high dynamic range (HDR) may be applied by at least one correction engine. When a thumbnail 631 of the entire image is selected from among the thumbnails in the second area 630, the electronic device 200 may display in the first area 610 the original image and the corrected image with respect to the entire image. Additionally, the electronic device 200 may display items 651, 652, and 653 indicating the applied correction engines in the third area 650 (or remaster engine area) above the first area 610. Each of the items 651, 652, and 653 displayed in the third area 650 may be selectable by a user input.

According to an embodiment, the electronic device 200 may remove the correction effect by the correction engine of the selected item, based on a user input regarding the item indicating the correction engine.

If the user selects the item 651 indicating the improve color among the items displayed in the third area 650 on the application screen as in (a) of FIG. 6, the improve color effect by the correction engine may be removed as shown in (b) of FIG. 6. In this case, the improve face clarity and the HDR, which are not selected by the user, may be applied as is. With reference to (b) of FIG. 6, the original image displayed in the first sub-area remains unchanged, but the corrected image displayed in the second sub-area may have the improve color effect removed and only the improve face clarity and HDR applied. As such, the user can directly remove at least some of the correction effects provided by the auto-correction function, using the item 651 indicating the correction engine displayed in the third area 650.

According to an embodiment, the electronic device 200 may display indicators indicating a plurality of filters applied by the correction engine in one area (e.g., the first area 610) of the display. With reference to (a) of FIG. 6, when the item 651 indicating the improve color engine is selected based on a user input, the electronic device 200 may display in the first area 610 an indicator 656 indicating light balance, an indicator 657 indicating brightness, and an indicator 658 indicating exposure, which are filters applied by the improve color engine. Each of the indicators 656, 657, and 658 may be a toggle button selectable based on a user input, and when the user selects the indicator 656 indicating light balance, the application of the light balance filter may be removed from the corrected image.

According to an embodiment, the electronic device 200 may determine whether to display the indicators indicating a plurality of filters applied by the correction engine, based on a user setting. For example, if the user disables the display of the indicators in the settings of the gallery application, the indicators 656, 657, and 658 displayed in the first area 610 may not be displayed.

FIG. 7 illustrates an example of screens showing a specific object area in an original image and a corrected image according to an embodiment.

According to an embodiment, when one of thumbnails of objects with a large correction effect displayed in a second area 730 is selected, the electronic device 200 (e.g., the electronic device 200 in FIG. 2) may display the area of the object of the selected thumbnail in a first area 710 (or remaster area) of the application screen.

According to an embodiment, when an auto-correction function is performed for an original image by a correction engine, at least some correction engines may be applied only to some of the objects contained in the original image. For example, if the original image contains objects such as a person, an animal, a thing, and a background, the improve face clarity function may be applied only to the face area of the person object. According to an embodiment, when the area of a specific object of the original image and the corrected image is displayed in the first area 710 based on the selection of a thumbnail 732, the electronic device 200 may display items 751 and 752 indicating the correction engines applied to the displayed object from among the correction engines applied to the corrected image in a third area 750 (or remaster engine area).

With reference to (a) FIG. 7, when the thumbnail 732 of the first object is selected by a user input, the electronic device 200 may display the area of the first object of the original image and the area of the first object of the corrected image in the first area 710 of the gallery application screen. Among the correction engines applied to the entire image, such as improve color, improve face clarity, and high dynamic range (HDR), the improve color and the improve face clarity may be applied to the first object, and the HDR may not be applied. In this case, the electronic device 200 may display in the third area 750 the items 751 and 752 indicating the correction engines (e.g., the improve color and the improve face clarity) applied to the first object.

According to an embodiment, when a user input is received for a certain item indicating the correction engine displayed in the third area 750 while the first object included in the selected thumbnail 732 is displayed in the first area 710, the electronic device 200 may remove the correction effect of the correction engine indicated by the selected item from the area of the first object in the corrected image. For example, when the user selects the item 751 indicating the improve color in the screen of (a) of FIG. 7, the improve color effect by the correction engine may be removed as shown in (b) of FIG. 7. In this case, the improve face clarity that is not selected by the user may be applied as is to the first object. In addition, the improve color effect removed by the user may be applied as is to other objects in the corrected image, not the first object.

According to another embodiment, when a user input is received for a certain item indicating the correction engine, the electronic device 200 may provide an additional menu that allows the user to select an area (e.g., the entire area, the object area of the thumbnail) from which the correction effect of the correction engine corresponding to the item is to be removed. For example, when the user selects the item 751 indicating the improve color on the screen of (a) of FIG. 7, the electronic device 200 may provide additional menus 756 and 757 in the form of a pop-up that allow the user to select whether to apply the removal of the improve color effect to the first object area or the entire image, as shown in (c) of FIG. 7. When the user selects the object area 756 from among the additional menus, the electronic device 200 may remove the improve color effect only from the area of the first object, and when the user selects the entire image 757, the electronic device 200 may remove the improve color effect from the entire corrected image.

According to an embodiment, when a user input for a certain item indicating the correction engine is received, the electronic device 200 may provide the entire image in the form of a preview with the correction effect of the correction engine corresponding to the item removed from the object area of the thumbnail. For example, when an item indicating a specific correction engine is selected, the electronic device 200 may display in the form of a pop-up an image with the correction effect for the selected item removed only from the object area of the thumbnail in the entire image area. Thus, the user can identify the image with the correction effect removed from the area of the corresponding object. Alternatively, the electronic device 200 may display the entire image with the correction effect removed only from the specific object area in the first sub-area 712.

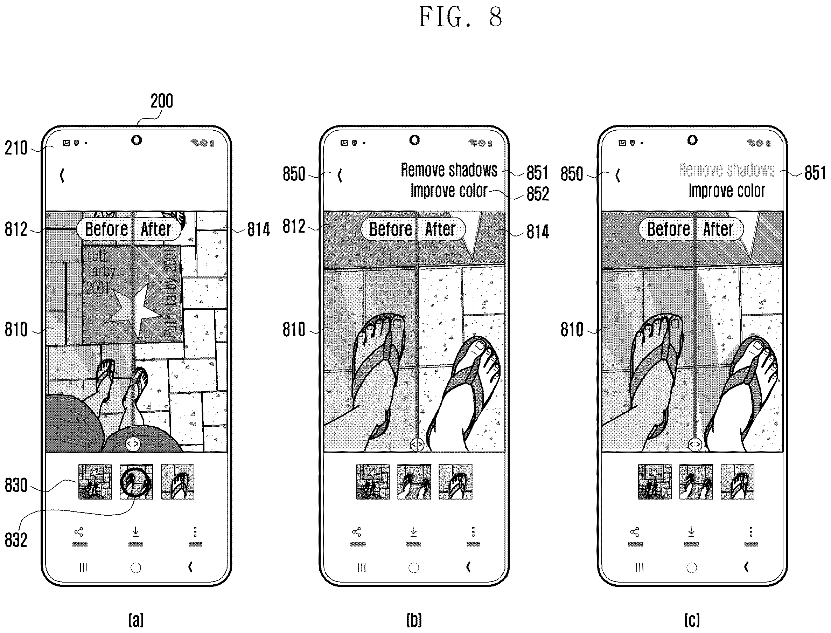

FIG. 8 illustrates screens sequentially displayed during image auto-correction in a gallery application according to an embodiment.

According to an embodiment, the electronic device 200 (e.g., the electronic device 200 in FIG. 2) may correct an original image, using at least some of a plurality of predetermined engines. In this case, different correction engines may be applied depending on the type of each object (e.g., person, animal, thing, background) contained in the original image.

With reference to (a) of FIG. 8, the electronic device 200 may apply an auto-correction function to the original image and display a left portion of the original image and a right portion of the corrected image in a first area 810 (or remaster area) of the gallery application screen. The electronic device 200 may identify a first object and a second object having a large correction effect in the entire image area, and display a thumbnail corresponding to the entire image, a thumbnail 832 corresponding to the first object, and a thumbnail corresponding to the second object in a second area 830 (or focus view area).

With reference to (b) of FIG. 8, when the thumbnail 832 of the first object is selected from among the thumbnails displayed in the second area 830, the electronic device 200 may display in the first area 810 a left portion of the original image of the first object and a right portion of the corrected image. The electronic device 200 may identify correction engines, which are a remove shadow engine and an improve color engine, applied to the first object area, and display items 851 and 852 indicating the respective correction engines in a third area 850 (or correction engine area).

With reference to (c) of FIG. 8, when any one of the items indicating the correction engines displayed in the third area 850 is selected in response to a user input, the electronic device 200 may remove the correction effect of the selected item. In (b) of FIG. 8, the remove shadow effect is applied to the corrected image, but when the user selects the item 851 indicating the remove shadow in the third area 850, the remove shadow effect is removed in (c) of FIG. 8, so that the shadow may be expressed as it is in the corrected image as in the original image.

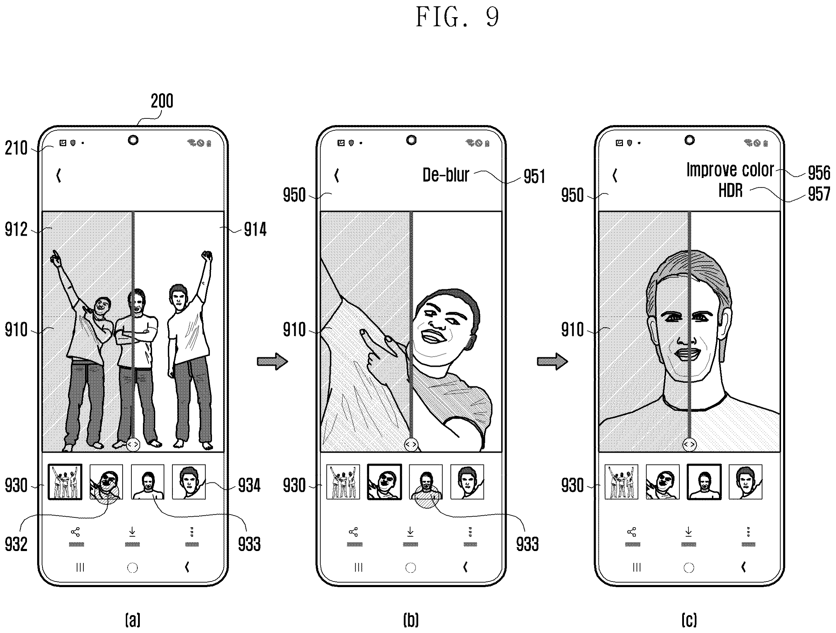

FIG. 9 illustrates screens sequentially displayed during image auto-correction in a gallery application according to an embodiment.

According to an embodiment, the electronic device 200 (e.g., the electronic device 200 in FIG. 2) may correct an original image, using at least some of a plurality of predetermined engines. In this case, different correction engines may be applied depending on the characteristics of respective objects contained in the original image. For example, if the image contains the faces of several persons, the electronic device 200 may apply different correction engines depending on race or skin color.

With reference to (a) of FIG. 9, the image selected by the user may contain three persons with different skin colors (or races). The electronic device 200 may apply an auto-correction function to generate a corrected image and display a left portion of the original image and a right portion of the corrected image in a first area 910 (or remaster area). The electronic device 200 may identify the faces of three persons as objects with a significant correction effect in the corrected image and display thumbnails of three faces in a second area 930 (or focus view area).

With reference to (b) of FIG. 9, when a thumbnail 932 of a first object is selected from among the thumbnails displayed in the second area 930, the electronic device 200 may display a left portion of the original image of the first object and a right portion of the corrected image in the first area 910. The electronic device 200 may display an item 951 indicating a de-blurring, which is a correction engine applied to the first object area, in a third area 950 (or remaster engine area). According to an embodiment, when at least one of the items 951 in the third area 950 is selected in response to a user input, the electronic device 200 may remove the correction effect of the selected item from the corrected image.

With reference to (c) of FIG. 9, when a thumbnail 933 of a second object is selected from among the thumbnails displayed in the second area 930, the electronic device 200 may display a left portion of the original image of the second object and a right portion of the corrected image in the first area 910. The electronic device 200 may display an item 956 indicating an improve color and an item 957 indicating an HDR, which are correction engines applied to the second object area, in the third area 950. Since the face of the person corresponding to the second object has a different skin color or race compared to the face of the person corresponding to the first object, a different correction engine may be applied from that of the first object. According to an embodiment, when at least one of the items 956 and 957 in the third area 950 is selected in response to a user input, the electronic device 200 may remove the correction effect of the selected item from the corrected image.

FIG. 10 illustrates an example of designating a certain area and changing the effect of a correction engine in a state where a specific object is displayed according to an embodiment.

According to an embodiment, while at least a portion of an original image and at least a portion of a corrected image are displayed, the electronic device 200 (e.g., the electronic device 200 in FIG. 2) may receive a user input designating a specific area of an image and remove a correction effect of a correction engine applied to the area designated by the user.

With reference to (a) of FIG. 10, based on a user input 1023 for a thumbnail 1032 of a first object among the thumbnails displayed in a second area 1030, the electronic device 200 may focus on an area of the first object contained in the image and display it in a first area 1010 of a gallery application. In addition, an item indicating the correction engine applied to the first object may be displayed in a third area 1050. For example, correction effects such as an improve color and an improve face clarity may be applied to the area including the first object in the entire image, and the electronic device 200 may enlarge the area including the first object with the correction effect applied and display it in the first area 1010.

With reference to (b) of FIG. 10, based on a predetermined user input 1025, the electronic device 200 may select an area 1020 from which to remove the correction effect by the correction engine in the image displayed in the first area 1010. For example, when a specific location of the image is long-touched, an area including an object at that location may be selected. Alternatively, an area may be selected based on a touch or long-touch after a drawing gesture designating the area, or a specific area may be automatically designated based on a drawing gesture. The types of user input for selecting the area 1020 from which to remove the correction effect are not limited to the above examples.

According to an embodiment, when the area 1020 is selected in the image based on the user input 1025, the electronic device 200 may provide an item 1040 indicating a function applicable to the area. For example, the item 1040 may include functions such as sticker, copy, share, or save for the area. When the user selects the sticker item in the item 1040, the electronic device 200 may create and store the selected object as a sticker type that can be inserted into a message, and allow the user to add the stored object sticker when sending a message or uploading to SNS. When the user selects the copy item in the item 1040, the electronic device 200 may copy the selected area of the image and allow the user to paste it onto a document or another image. When the user selects the share item in the item 1040, the electronic device 200 may provide a menu list that allows the user to select an application (e.g., message, SNS) with which to share the image of the selected area and/or a partner with whom to share the image. When the user selects the save item in the item 1040, the electronic device 200 may save the image of the selected area as a separate image file.

According to an embodiment, the electronic device 200 may display the designated area 1020 distinct from the remaining areas, based on a user input. For example, the electronic device 200 may display a dotted line border 1021 around the designated area 1020. When the specific area 1020 is designated, the electronic device 200 may remove the correction effect of the correction engine applied to the designated area. In this case, the removal of the correction effect may cause items displayed in the third area 1050 to be removed or displayed in a faded manner. According to an embodiment, the electronic device 200 may dim a thumbnail of a first object with the correction effect removed in the second area 1030.

According to another embodiment, the electronic device 200 may designate the area 1020 based on a user input, and then, based on the selection of an item displayed in the third area 1050, remove the correction effect of the selected item from the designated area 1020.

With reference to (c) of FIG. 10, when a left portion of the original image and a right portion of the corrected image are displayed in the first area 1010 of the gallery application, the correction effect may not appear in the area 1020 designated by a user input for removing the correction effect in the right portion of the corrected image. Since the correction effect may be applied as is to the remaining areas of the corrected image other than the area 1020 designated by the user input, the item indicating the correction engine may be displayed in the third area 1050 without being removed.

FIG. 11 illustrates a method for determining the order of thumbnails corresponding to objects in an image according to an embodiment.

According to an embodiment, the electronic device 200 may extract an area of at least one object with a significant correction effect from a corrected image, and generate and display at least one thumbnail corresponding to the object(s).

According to an embodiment, in the case where a plurality of objects and thumbnails are generated, the electronic device 200 may determine the arrangement order of the thumbnails, based on the amount of change in pixel data, object types, and/or object sizes.

With reference to FIG. 11, the electronic device 200 may extract a first object and a second object, which are objects with a significant correction effect, as a result of applying an auto-correction function to an original image. According to an embodiment, the electronic device 200 may calculate the degree of the correction effect based on the amount of change in pixel data of each pixel of the first object and the second object, and may preferentially display a thumbnail of the object with a larger correction effect in a second area 1130 (or focus view area).

According to an embodiment, the electronic device 200 may determine the arrangement order of a thumbnail 1132 of the first object and a thumbnail 1133 of the second object, based on the amount of change in pixel data of the original image and the corrected image for the first object and the second object. For example, the electronic device 200 may calculate a difference between the pixel data of the original image and the pixel data of the corrected image for each pixel of the first object, and calculate the average of the absolute values (or squares) of the differences calculated for respective pixels. The electronic device 200 may compare the averages of the pixel data calculated for the first object and the second object, and display the thumbnail 1132 of the first object having a larger value before the thumbnail 1133 of the second object. With reference to FIG. 11, in the second area 1130, a thumbnail of the entire image, the thumbnail 1132 of the first object, and the thumbnail 1133 of the second object are sequentially displayed.

According to another embodiment, the electronic device 200 may determine the arrangement order of thumbnails, based on the ratio of pixels whose pixel data has changed among the pixels in the area including the object. For example, the electronic device 200 may obtain the ratio of the number of pixels whose pixel data has changed from the original image to the total number of pixels in the area of the first object of the corrected image, and obtain the ratio of the number of pixels whose pixel data has changed from the original image to the total number of pixels in the area of the second object. The electronic device 200 may determine that an object with a larger calculated ratio has a larger correction effect, and display it preferentially in the second area 1130.

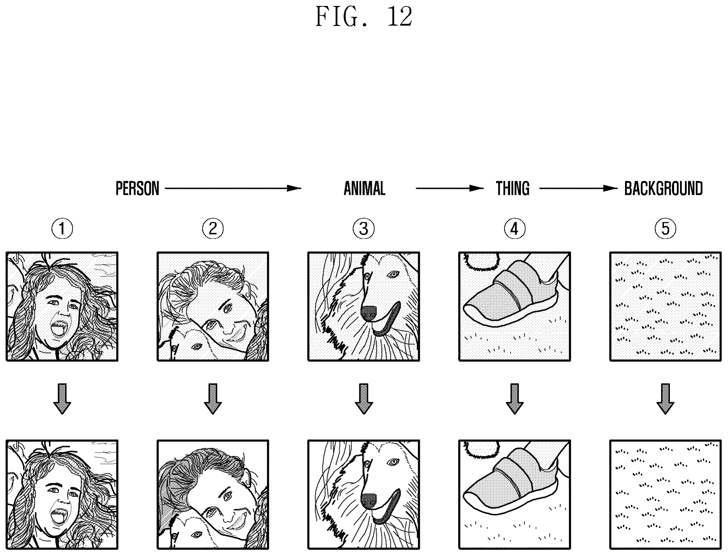

FIG. 12 illustrates a method for determining the order of thumbnails corresponding to objects in an image according to an embodiment.

According to an embodiment, the electronic device (e.g., the electronic device 200 in FIG. 2) may determine the arrangement order of thumbnails, based on the types of objects included in the thumbnails. Here, the object types may include a person, an animal, a thing, and a background. The electronic device may extract a plurality of objects from an image and determine the type of each object using various algorithms. The electronic device may designate the entire area other than distinguishable objects, such as the person, the animal, and the thing, as the background of the image, or segment the background area according to the characteristics of pixel data and process it as at least one background object.

With reference to FIG. 12, the electronic device may extract five objects from an original image or a corrected image. The electronic device may determine the type of each object and determine the arrangement order of thumbnails for the respective objects in the order of person - animal - thing - background.

According to an embodiment, for the person and/or animal objects, the electronic device may determine that thumbnails of objects with a high degree of relevance (or intimacy) to the user are given a higher priority. For example, the electronic device may give a higher arrangement order priority to the user of the electronic device, the person or animal with a high editing frequency in the gallery application, or the person or animal located in the vicinity of the user of the electronic device.

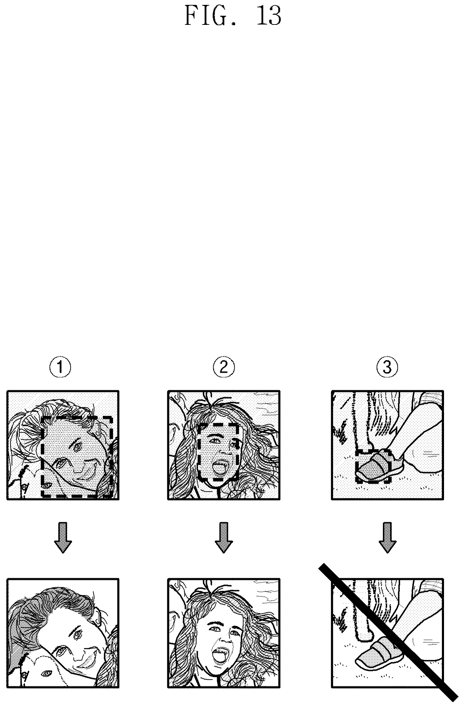

FIG. 13 illustrates a method for determining the order of thumbnails corresponding to objects in an image according to an embodiment.

According to an embodiment, the electronic device (e.g., the electronic device 200 in FIG. 2) may determine the arrangement order of thumbnails, based on the sizes of objects included in the thumbnails.

With reference to FIG. 13, the electronic device may extract three objects from an original image or a corrected image. The first object may include a person's face object and may be relatively large in size. The second object may include a person's face object and may be smaller in size than the first object. The third object may include a shoe object classified as the thing and may be relatively small in size. When arranging thumbnails, the electronic device may determine the priorities in the order of the first object with the largest size, the second object, and the third object.

According to an embodiment, if any extracted object has a size less than a reference value, the electronic device may not generate a thumbnail for the object even if the correction effect is determined to be significant. Here, the reference value for size may be, but is not limited to, the size of the thumbnail.

According to an embodiment, when determining the arrangement order of thumbnails, the electronic device may consider all of the amount of change in pixel data, the object types, and the object sizes. For example, the electronic device may assign a score to each object based on the amount of change in pixel data, the object type, and the object size, and assign a higher priority to the thumbnail of the object with the higher score. In this case, the electronic device may calculate the score for each object by assigning different weights to the amount of change in pixel data, the object type, and the object size. For example, the electronic device may assign higher weights in the order of the amount of change in pixel data, the object type, and the object size.

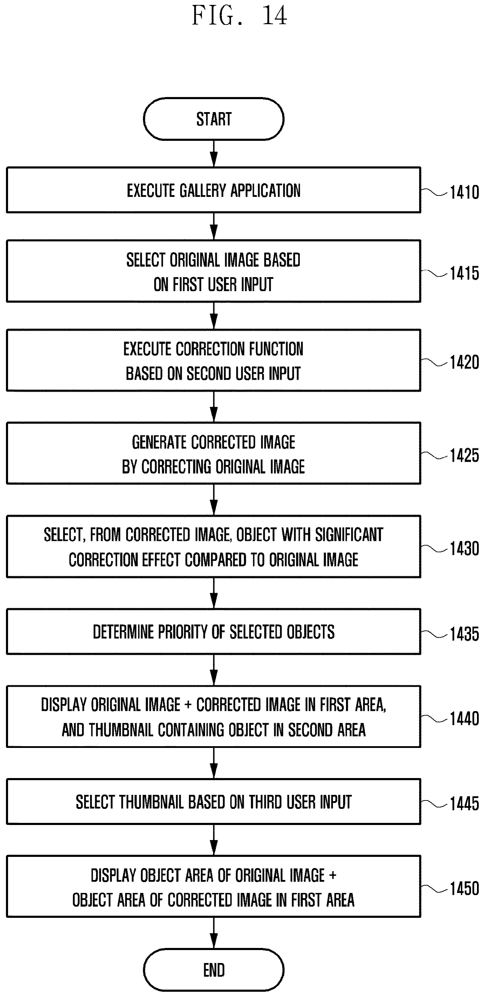

FIG. 14 is a flowchart of an image correcting method for an electronic device according to an embodiment.

The illustrated method can be performed by the electronic device (e.g., the electronic device 200 in FIG. 2) described with reference to FIGS. 1 to 13, and the technical features described above will be omitted herein.

According to an embodiment, in operation 1410, the electronic device may execute a gallery application. The gallery application may display images stored in the memory and support various functions such as copying/deleting/moving images, sharing images with other devices, and editing images.

According to an embodiment, in operation 1415, the electronic device may select an original image to be subject to auto-correction, based on a first user input on the display. For example, if a specific image thumbnail is selected while the gallery application is running, the electronic device may display the image of the selected thumbnail and select the currently displayed image as the original image when executing an auto-correction function.

According to an embodiment, in operation 1420, the electronic device may execute the auto-correction function, based on a second user input on the display. For example, when the user selects an auto-correction function item provided by selecting a more options item of the gallery application, the electronic device may execute the auto-correction function for the original image.

According to an embodiment, in operation 1425, the electronic device may generate a corrected image by correcting the original image according to the auto-correction function (or remaster function). According to an embodiment, the auto-correction function may be executed by at least some of a plurality of correction engines. For example, the correction functions performed by the plurality of correction engines may include, but are not limited to, at least one of improve color, improve clarity, remove shadow, upscaling, compensate low light image, high dynamic range (HDR), de-blurring, de-moire, auto-tone, or ultra-wide (UW) distortion correction for at least a portion of the original image. The electronic device may analyze the original image, identify the necessary correction functions for the original image, and select at least one correction engine.

According to an embodiment, in operation 1430, the electronic device may select, from the corrected image, at least one object that has a significant correction effect compared to the original image. The electronic device may determine whether an object has a significant correction effect by the auto-correction function, based on changes in pixel data in the area including the object in the original image and the corrected image.

According to an embodiment, in operation 1435, the electronic device may determine a priority for determining the arrangement order of the selected objects. According to an embodiment, the electronic device may determine the arrangement order of respective thumbnails, based on the amount of change in pixel data of the object included in the thumbnail between the original image and the corrected image, the type (e.g., person, animal, thing, background) of the object, and/or the size of the object.

According to an embodiment, in operation 1440, the electronic device may display at least a portion of the original image and at least a portion of the corrected image in a first area of a screen of the gallery application. Additionally, the electronic device may display a thumbnail of at least one object in a second area of the gallery application screen.

According to an embodiment, the electronic device may display a first part (e.g., a left portion) of the original image in a first sub-area of the first area of the gallery application screen, and display a second part (e.g., a right portion) of the corrected image in a second sub-area of the first area. The electronic device may display a boundary indicator that separates the first sub-area and the second sub-area, and the sizes of the first and second sub-areas may change according to a user input for the boundary indicator.

According to an embodiment, each thumbnail displayed in the second area may be a reduced image of an area containing the corresponding object, and a thumbnail of the entire image and thumbnails of object areas may be arranged in the second area according to the arrangement order determined in operation 1435.

According to an embodiment, the electronic device may display an item indicating at least one correction engine applied to the corrected image in a third area of the gallery application screen. Upon receiving a user input for the item indicating the correction engine, the electronic device may remove the correction effect of the correction engine for the selected item from the image (e.g., the entire image, a specific object) currently displayed in the first area based on the user input.

According to an embodiment, in operation 1445, the electronic device may select one of the thumbnails in the second area, based on a user input on the display.

According to an embodiment, in operation 1450, the electronic device may focus on a selected object area of the original image and a selected object area of the corrected image and display them in the first area of the gallery application screen. For example, when a thumbnail of a first object is selected, the electronic device may select an area containing the first object in the entire image, enlarge the selected area, and display it in the first area of the gallery application. The electronic device may display a first enlarged image, which is an enlarged left portion of the first object in the original image, in the first sub-area of the first area of the gallery application screen, and display a second enlarged image, which is an enlarged right portion of the first object in the corrected image, in the second sub-area.

Thus, by simultaneously displaying the areas of the selected object from the original image and the corrected image in response to the thumbnail selection, the user can readily perceive the extent of the correction effect applied to a specific portion of the image.

Instructions for performing the above method may be recorded on a computer-readable medium. When executed by a processor of an electronic device, the instructions may cause the method to be performed.

An electronic device 200 according to various embodiments of the disclosure may include a display 230, a memory 220, and a processor 210 operatively connected to the display and the memory.

According to an embodiment, the processor 210 may select one original image from among images stored in the memory, generate a corrected image by executing a correction function for the original image, identify at least one object having a large correction effect compared to the original image according to execution of the correction function among a plurality of objects contained in the original image and the corrected image, generate at least one thumbnail containing the identified at least one object, display at least a portion of the original image and at least a portion of the corrected image in a first area 410 of the display, and display the at least one thumbnail in a second area 430 of the display.

According to an embodiment, the processor 210 may be configured to, when a user input is received for a first thumbnail 432 among the thumbnails displayed in the second area, display in the first area a first enlarged image 462, which magnifies an area including at least a portion of an object contained in the first thumbnail in the original image, and a second enlarged image 464, which magnifies an area including at least a portion of the object contained in the first thumbnail in the corrected image.

According to an embodiment, the processor 210 may be configured to select the at least one object having the large correction effect among the plurality of objects, based on an average of amount of change in pixel data of each pixel of an area including an object in the original image and the corrected image, or a ratio of pixels whose pixel data has changed among the pixels of the area including the object.

According to an embodiment, the processor 210 may be configured to, when the correction function is executed, select at least one of a plurality of predetermined correction engines by analyzing the original image, and generate the corrected image by correcting at least a portion of the original image using the selected at least one correction engine.

According to an embodiment, the processor 210 may be configured to display in a third area 650 of the display at least one item 651, 652, 653 indicating at least one correction engine applied to the corrected image displayed in the first area.

According to an embodiment, the processor 210 may be configured to, based on a user input for the item 651, 652, 653 displayed in the third area, remove the correction effect of the correction engine indicated by the selected item for the entire corrected image.

According to an embodiment, the processor 210 may be configured to, when the first enlarged image and the second enlarged image are displayed in the first area, display in a third area of the display at least one item 751, 752 indicating at least one correction engine applied to an object contained in the first thumbnail.

According to an embodiment, the processor 210 may be configured to, based on a user input for an item displayed in the third area, remove the correction function by the correction engine indicated by the selected item for an object contained in the first thumbnail.

According to an embodiment, correction functions performed by the plurality of correction engines may include at least one of improve color, improve clarity, remove shadow, upscaling, compensate low light image, high dynamic range (HDR), de-blurring, de-moire, auto-tone, or ultra-wide (UW) distortion correction for at least a portion of the original image.

According to an embodiment, the processor 210 may be configured to determine the arrangement order of the at least one thumbnail in the second area, based on the order of the correction effects for the object included in the at least one thumbnail.

According to an embodiment, the processor 210 may be configured to determine the arrangement order of the at least one thumbnail in the second area, further based on the type or size of the object included in the at least one thumbnail.

According to an embodiment, the processor 210 may be configured to select the original image from among images stored in the memory based on a first user input on the display while the gallery application is running, and execute a correction function for the original image based on a second user input on the display.

According to an embodiment, the first area may be divided through a boundary indicator 420 into a first sub-area where at least a portion of the original image is displayed and a second sub-area where at least a portion of the corrected image is displayed, and the processor 210 may be configured to change sizes of the first and second sub-areas based on a user input for the boundary indicator.

An image correcting method of an electronic device according to various embodiments of the disclosure may include selecting one original image from among images stored in a memory of the electronic device; generating a corrected image by executing a correction function for the original image; identifying at least one object having a large correction effect compared to the original image according to execution of the correction function among a plurality of objects contained in the original image and the corrected image; generating at least one thumbnail containing the identified at least one object; displaying at least a portion of the original image and at least a portion of the corrected image in a first area of a display of the electronic device, and displaying the at least one thumbnail in a second area of the display; and when a user input is received for a first thumbnail among the thumbnails displayed in the second area, displaying in the first area a first enlarged image, which magnifies an area including at least a portion of an object contained in the first thumbnail in the original image, and a second enlarged image, which magnifies an area including at least a portion of the object contained in the first thumbnail in the corrected image.

According to an embodiment, selecting at least one object having a large correction effect may include selecting the at least one object having the large correction effect among the plurality of objects, based on an average of amount of change in pixel data of each pixel of an area including an object in the original image and the corrected image, or a ratio of pixels whose pixel data has changed among the pixels of the area including the object.

According to an embodiment, generating a corrected image may include, when the correction function is executed, selecting at least one of a plurality of predetermined correction engines by analyzing the original image, and generating the corrected image by correcting at least a portion of the original image using the selected at least one correction engine.

According to an embodiment, the method may further include displaying in a third area of the display at least one item indicating at least one correction engine applied to the corrected image displayed in the first area, and based on a user input for the item displayed in the third area, removing the correction effect of the correction engine indicated by the selected item for the entire corrected image.

According to an embodiment, the method may further include, when the first enlarged image and the second enlarged image are displayed in the first area, displaying in a third area of the display at least one item indicating at least one correction engine applied to an object contained in the first thumbnail, and based on a user input for an item displayed in the third area, removing the correction function by the correction engine indicated by the selected item for an object contained in the first thumbnail.

According to an embodiment, correction functions performed by the plurality of correction engines may include at least one of improve color, improve clarity, remove shadow, upscaling, compensate low light image, high dynamic range (HDR), de-blurring, de-moire, auto-tone, or ultra-wide (UW) distortion correction for at least a portion of the original image.

According to an embodiment, the method may further include determining an arrangement order of the at least one thumbnail in the second area, based on at least one of an order of a correction effect for an object included in the at least one thumbnail, a type or size of an object included in the at least one thumbnail.

An electronic device according to various embodiments of the disclosure may be one of various types of electronic devices. For example, the electronic device may include a portable communication device (e.g., a smartphone), a computer device, a portable multimedia device, a portable medical device, a camera, a wearable device, or a home appliance. However, the electronic device according to embodiments of the disclosure is not limited to any of those described above.

Various embodiments of the disclosure and the terms used herein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C" may include any one of, or all possible combinations of the items enumerated together in a corresponding one of the phrases. As used herein, such terms as "1^{st}" and "2^{nd}", or "first" and "second" may be used to simply distinguish a corresponding component from another, and does not limit the components in other aspect (e.g., importance or order). If a certain element (e.g., a first element) is referred to, with or without the term "operatively" or "communicatively," as "coupled with", "coupled to", "connected with", or "connected to" another element (e.g., a second element), the element may be coupled with the other element directly (e.g., wiredly), wirelessly, or via a third element.

The term "module" used in various embodiments of the disclosure may include a unit implemented in hardware, software, or firmware, or any combination thereof, and may interchangeably be used with other terms, for example, logic, logic block, component, or circuitry. A module may be a single integral component, or a minimum unit or part thereof, adapted to perform one or more functions. For example, according to an embodiment, the module may be implemented in a form of an application-specific integrated circuit (ASIC).

Various embodiments of the disclosure may be implemented as software (e.g., the program 140) including one or more instructions that are stored in a storage medium (e.g., the internal memory 136 or the external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

A method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. According to various embodiments, one or more of the above-described components may be omitted, or one or more other components may be added. Alternatively or additionally, a plurality of components (e.g., modules or programs) may be integrated into a single component. In such a case, the integrated component may perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (200) comprising:
a display (230);
a memory (220); and
at least one processor (210) operatively connected to the display and the memory,
wherein the memory (220) stores instructions that are executable by the at least one processor and, when executed, cause the electronic device (200) to:
select one original image from among images stored in the memory,
generate a corrected image by executing a correction function for the original image,
identify at least one object having a large correction effect compared to the original image according to execution of the correction function among a plurality of objects contained in the original image and the corrected image,
generate at least one thumbnail containing the identified at least one object,
display at least a portion of the original image and at least a portion of the corrected image in a first area (410) of the display, and display the at least one thumbnail in a second area (430) of the display, and
when a user input is received for a first thumbnail (432) among the thumbnails displayed in the second area, display in the first area a first enlarged image (462), which magnifies an area including at least a portion of an object contained in the first thumbnail in the original image, and a second enlarged image (464), which magnifies an area including at least a portion of the object contained in the first thumbnail in the corrected image.

2. The electronic device of claim 1, wherein the memory (220) stores instructions that cause the electronic device (200) to:
select the at least one object having the large correction effect among the plurality of objects, based on an average of amount of change in pixel data of each pixel of an area including an object in the original image and the corrected image, or a ratio of pixels whose pixel data has changed among the pixels of the area including the object.

3. The electronic device of claim 1 or 2, wherein the memory (220) stores instructions that cause the electronic device (200) to:
when the correction function is executed, select at least one of a plurality of predetermined correction engines by analyzing the original image, and
generate the corrected image by correcting at least a portion of the original image using the selected at least one correction engine.

4. The electronic device of claim 3, wherein the memory (220) stores instructions that cause the electronic device (200) to:
display in a third area (650) of the display at least one item (651, 652, 653) indicating at least one correction engine applied to the corrected image displayed in the first area.

5. The electronic device of claim 4, wherein the memory (220) stores instructions that cause the electronic device (200) to:
based on a user input for the item (651, 652, 653) displayed in the third area, remove the correction effect of the correction engine indicated by the selected item for the entire corrected image.

6. The electronic device of any one of claims 3 to 5, wherein the memory (220) stores instructions that cause the electronic device (200) to:
when the first enlarged image and the second enlarged image are displayed in the first area, display in a third area of the display at least one item (751, 752) indicating at least one correction engine applied to an object contained in the first thumbnail.

7. The electronic device of claim 5, wherein the memory (220) stores instructions that cause the electronic device (200) to:
based on a user input for an item displayed in the third area, remove the correction function by the correction engine indicated by the selected item for an object contained in the first thumbnail.

8. The electronic device of any one of claims 1 to 7, wherein correction functions performed by the plurality of correction engines include at least one of improve color, improve clarity, remove shadow, upscaling, compensate low light image, high dynamic range (HDR), de-blurring, de-moire, auto-tone, or ultra-wide (UW) distortion correction for at least a portion of the original image.

9. The electronic device of any one of claims 1 to 8, wherein the memory (220) stores instructions that cause the electronic device (200) to:
select the original image from among images stored in the memory based on a first user input on the display while the gallery application is running, and
execute a correction function for the original image based on a second user input on the display.

10. The electronic device of any one of claims 1 to 9, wherein the first area is divided through a boundary indicator (420) into a first sub-area where at least a portion of the original image is displayed and a second sub-area where at least a portion of the corrected image is displayed, and
the memory (220) stores instructions that cause the electronic device (200) to:
change sizes of the first and second sub-areas based on a user input for the boundary indicator.

11. An image correcting method of an electronic device, the method comprising:
selecting one original image from among images stored in a memory of the electronic device;
generating a corrected image by executing a correction function for the original image;
identifying at least one object having a large correction effect compared to the original image according to execution of the correction function among a plurality of objects contained in the original image and the corrected image;
generating at least one thumbnail containing the identified at least one object;
displaying at least a portion of the original image and at least a portion of the corrected image in a first area of a display of the electronic device, and displaying the at least one thumbnail in a second area of the display; and
when a user input is received for a first thumbnail among the thumbnails displayed in the second area, displaying in the first area a first enlarged image, which magnifies an area including at least a portion of an object contained in the first thumbnail in the original image, and a second enlarged image, which magnifies an area including at least a portion of the object contained in the first thumbnail in the corrected image.

12. The method of claim 11, wherein selecting at least one object having a large correction effect includes:
selecting the at least one object having the large correction effect among the plurality of objects, based on an average of amount of change in pixel data of each pixel of an area including an object in the original image and the corrected image, or a ratio of pixels whose pixel data has changed among the pixels of the area including the object.

13. The method of claim 11 or 12, wherein generating a corrected image includes:
when the correction function is executed, selecting at least one of a plurality of predetermined correction engines by analyzing the original image; and
generating the corrected image by correcting at least a portion of the original image using the selected at least one correction engine.

14. The method of claim 13, further comprising:
displaying in a third area of the display at least one item indicating at least one correction engine applied to the corrected image displayed in the first area; and
based on a user input for the item displayed in the third area, removing the correction effect of the correction engine indicated by the selected item for the entire corrected image.

15. A computer-readable, non-transitory recording medium storing instructions to perform operations of:
selecting one original image from among images stored in a memory of an electronic device;
generating a corrected image by executing a correction function for the original image;
identifying at least one object having a large correction effect compared to the original image according to execution of the correction function among a plurality of objects contained in the original image and the corrected image;
generating at least one thumbnail containing the identified at least one object;
displaying at least a portion of the original image and at least a portion of the corrected image in a first area of a display of the electronic device, and displaying the at least one thumbnail in a second area of the display; and
when a user input is received for a first thumbnail among the thumbnails displayed in the second area, displaying in the first area a first enlarged image, which magnifies an area including at least a portion of an object contained in the first thumbnail in the original image, and a second enlarged image, which magnifies an area including at least a portion of the object contained in the first thumbnail in the corrected image.
